(19) **Europäisches Patentamt** / **European Patent Office** / **Office européen des brevets**

(11) **EP 4 773 106 A1**

(12) **EUROPEAN PATENT APPLICATION**
published in accordance with Art. 153(4) EPC

(43) Date of publication:
**08.07.2026 Bulletin 2026/28**

(51) International Patent Classification (IPC):
***G06V 40/00*** *(2022.01)*

(21) Application number: **24890203.3**

(86) International application number:
**PCT/CN2024/110011**

(22) Date of filing: **06.08.2024**

(87) International publication number:
**WO 2025/102839 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.11.2023 CN 202311508065**

(71) Applicant: **Tencent Technology (Shenzhen) Company Limited**
**Shenzhen, Guangdong 518057 (CN)**

(72) Inventor: **SHEN, Lei**
**Shenzhen, Guangdong 518057 (CN)**

(74) Representative: **EP&C**
**P.O. Box 3241**
**2280 GE Rijswijk (NL)**

(54) **MODEL TRAINING METHOD AND APPARATUS, AND BIOMETRIC IMAGE GENERATION METHOD AND APPARATUS**

(57) The present application discloses a model training method and apparatus, and a biometric image generation method and apparatus. The model training method comprises: acquiring a first sample image, sample distribution data, a second sample image, and a first preset signal; inputting into a generation model to be trained a first encoded feature of the first sample image and the sample distribution data for biometric image generation processing to obtain a target sample image; by incorporating a first object recognition result corresponding to the first sample image, a second object recognition result corresponding to the second sample image, and a third object recognition result corresponding to the target sample image, determining a comparison recognition loss; determining a biological texture loss on the basis of the first encoded feature and the first preset signal; and training said generation model on the basis of the comparison recognition loss and the biological texture loss to obtain an image generation model. The present application can improve the performance of the image generation model, thereby improving the biometric image generation effect by means of the image generation model.

FIG. 2

**Description**

FIELD OF THE TECHNOLOGY

This application relates to the technical field of artificial intelligence, and in particular, to a method and an apparatus for training a model, and a method and an apparatus for generating a biometric image.

BACKGROUND OF THE DISCLOSURE

With the development of the artificial intelligence technology, the artificial intelligence technology has been increasingly widely applied to various object identity authentication scenarios. For example, based on the deep learning technology, by learning representation of biometric features such as palm prints and human faces of objects, a model learns distinguishable potential features, and analyzes the biometric features with a trained model for identity information recognition. However, during the identity information recognition with the deep learning technology, the deep learning model usually relies on a large batch of biometric images, but the biometric images have strong privacy and security, resulting in lack of numerous biometric images for model learning in the field of identity information recognition. In the related art, to obtain sample biometric images of an identity information recognition model, a conventional machine learning method is often employed for modeling and generation based on a few existing sample biometric images. New sample biometric images can be generated by learning distributions and features of the existing samples. However, in the related art, the method for generating the new samples by directly learning the features of the existing samples often has poor representation effects of biometric features, and generated biometric images have poor effectiveness.

SUMMARY

This application provides a method and an apparatus for training a model, a method and an apparatus for generating a biometric image, a device, a storage medium, and a computer program product, which can improve performance of an image generation model, further improve representation accuracy of a biometric feature through the image generation model, and further improve effectiveness of a generated biometric image.

In a first aspect, this application provides a method for training a model. The method includes:

obtaining a first biometric image, sample distribution data, a second biometric image, and a first preset signal, the first biometric image indicating a first sample object, the second biometric image indicating a second sample object, the sample distribution data representing a distribution of biometric line features in the first biometric image, and the first preset signal indicating biometric texture features;

encoding the first biometric image to obtain a first encoded feature;

inputting the first encoded feature and the sample distribution data into an initial generation model, and performing biometric image generation to obtain a target sample image;

obtaining a first object recognition result corresponding to the first biometric image, a second object recognition result corresponding to the second biometric image, and a third object recognition result corresponding to the target sample image;

determining a contrastive recognition loss based on the first object recognition result, the second object recognition result, and the third object recognition result, the contrastive recognition loss being configured for characterizing consistency between the first object recognition result and the third object recognition result and a difference between the first object recognition result and the second object recognition result;

determining a biometric texture loss based on the first encoded feature and the first preset signal; and

training the initial generation model based on the contrastive recognition loss and the biometric texture loss, to obtain an image generation model, the image generation model being configured to generate a realistic biometric image of any object.

In another aspect, this application provides a method for generating a biometric image. The method includes:

obtaining target distribution data corresponding to a target object and a second preset signal, the target distribution data representing a distribution of biometric line features in an original biometric image of the target object, and the second preset signal indicating biometric texture features; and

inputting the target distribution data and the second preset signal into an image generation model, and performing biometric image generation to obtain a target image, the target image being a realistic biometric image corresponding to the target object; and

the image generation model being obtained by training a to-be-trained model based on a contrastive recognition loss and a biometric texture loss, the contrastive recognition loss being determined based on a first object recognition result corresponding to a first biometric image, a second object recognition result corresponding to a second biometric image, and a third object recognition result corresponding to a target sample image, and the contrastive recognition loss being configured for characterizing consistency between the first object recognition result and the third object recognition result and a difference between the first object recognition result and the second object recognition result; the first biometric image indicating the first sample object, the second biometric image indicating the second sample object, the target sample image being obtained through biometric image generation by the initial generation model based on sample distribution data and a first encoded feature obtained by encoding the first biometric image, and the sample distribution data representing a distribution of biometric line features in the first biometric image; and the biometric texture loss being determined based on the first encoded feature and a first preset signal, and the first preset signal being a signal conforming to the distribution of the biometric texture features.

In yet another aspect, an apparatus for training a model is provided. The apparatus includes:

a first sample data obtaining module configured to obtain a first biometric image, sample distribution data, a second biometric image, and a first preset signal, the first biometric image indicating a first sample object, the second biometric image indicating a second sample object, the sample distribution data representing a distribution of biometric line features in the first biometric image, and the first preset signal indicating biometric texture features;

a first encoding module configured to encode the first biometric image to obtain a first encoded feature;

a first image generation module configured to input the first encoded feature and the sample distribution data into an initial generation model, and perform biometric image generation to obtain a target sample image;

a first object recognition module configured to obtain a first object recognition result corresponding to the first biometric image, a second object recognition result corresponding to the second biometric image, and a third object recognition result corresponding to the target sample image;

a contrastive recognition loss determining module configured to determine a contrastive recognition loss based on the first object recognition result, the second object recognition result, and the third object recognition result, the contrastive recognition loss being configured for characterizing consistency between the first object recognition result and the third object recognition result and a difference between the first object recognition result and the second object recognition result;

a biometric texture loss determining module configured to determine a biometric texture loss based on the first encoded feature and the first preset signal; and

a model training module configured to train the initial generation model based on the contrastive recognition loss and the biometric texture loss, to obtain an image generation model, the image generation model being configured to generate a realistic biometric image of any object.

In yet another aspect, an apparatus for generating a biometric image is provided. The apparatus includes:

a data obtaining module configured to obtain target distribution data corresponding to a target object and a second preset signal, the target distribution data representing a distribution of biometric line features in an original biometric image of the target object, and the second preset signal indicating biometric texture features; and

a second image generation module configured to input the target distribution data and the second preset signal into an image generation model, and perform biometric image generation to obtain a target image, the target image being a realistic biometric image corresponding to the target object; and

the image generation model being obtained by training a to-be-trained model based on a contrastive recognition loss and a biometric texture loss, the contrastive recognition loss being determined based on a first object recognition result corresponding to a first biometric image, a second object recognition result corresponding to a second biometric image, and a third object recognition result corresponding to a target sample image, and the contrastive recognition loss being configured for characterizing consistency between the first object recognition result and the third object recognition result and a difference between the first object recognition result and the second object recognition result; the first biometric image indicating the first sample object, the second biometric image indicating the second sample object, the target sample image being obtained through biometric image generation by the initial generation model based on sample distribution data and a first encoded feature obtained by encoding the first biometric image, and the sample distribution data representing a distribution of biometric line features in the first biometric image; and the biometric texture loss being determined based on the first encoded feature and a first preset signal, and the first preset signal being a signal conforming to the distribution of the biometric texture features.

In yet another aspect, an electronic device is provided. The electronic device includes: a processor; and

> a memory configured to store a processor-executable instruction;

> the processor being configured to execute the instruction, to implement any method for training a model or any method for generating a biometric image described above.

In yet another aspect, a computer-readable storage medium is provided. An instruction in the storage medium, when executed by a processor of an electronic device, causes the electronic device to perform any method for training a model or any method for generating a biometric image described above.

In still another aspect, a computer program product or a computer program is provided. The computer program product or the computer program includes a computer instruction, the computer instruction being stored in a computer-readable storage medium. A processor of a computer device reads the computer instruction from the computer-readable storage medium, and the processor executes the computer instruction, to cause the computer device to perform the method for training a model and the method for generating a biometric image according to various exemplary implementations described above.

The method and apparatus for training a model, the method and apparatus for generating a biometric image, the device, the storage medium, and the computer program product according to this application have the following technical effects:

In a model training process of generating the realistic biometric image of this application, the original biometric image of the first sample object is encoded to obtain the first encoded feature, and the biometric texture loss is determined based on the first encoded feature and the first preset signal conforming to the distribution of the biometric texture features. In addition, the first encoded feature and the sample distribution data representing the distribution of the biometric line features corresponding to the first sample object are inputted into the initial generation model, and the biometric image generation is performed, to obtain the realistic biometric image corresponding to the first sample object. In combination with the first object recognition result corresponding to the original biometric image of the first sample object, the second object recognition result corresponding to the original biometric image of the second sample object, and the third object recognition result corresponding to the realistic biometric image of the first sample object, the contrastive recognition loss configured for constraining the consistency between the same objects and the difference between different objects is determined. Then, the initial generation model is trained based on the contrastive recognition loss and the biometric texture loss. In this way, under a constraint of the biometric texture loss, the initial generation model can learn the biometric line features of an object from the sample distribution data, and can further master a capacity to learn texture features from a Gaussian distribution. Thus, the accuracy of the biometric representation of the object through the image generation model obtained through training can be improved. In addition, under a constraint of the contrastive recognition loss, the initial generation model can also learn the consistency between the same objects and the difference between different objects. The accuracy of the biometric representation through the image generation model obtained through training can be better improved, and the performance of the image generation model can be improved accordingly. Further, the representation accuracy of the biometric feature can be better improved through the image generation model, and the effectiveness of the realistic biometric image generated by the image generation model can be improved accordingly.

BRIEF DESCRIPTION OF THE DRAWINGS

> FIG. 1 is a schematic diagram of an application environment according to an embodiment of this application.

> FIG. 2 is a schematic flowchart of a method for training a model according to an embodiment of this application.

> FIG. 3 is a schematic flowchart of determining a contrastive recognition loss based on a first object recognition result, a second object recognition result, and a third object recognition result according to an embodiment of this application.

> FIG. 4 is a schematic diagram of a model training process according to an exemplary embodiment.

> FIG. 5 is a schematic flowchart of a method for generating a biometric image according to an embodiment of this application.

> FIG. 6 is a schematic diagram of a biometric image generation process according to an embodiment of this application.

> FIG. 7 is a schematic structural diagram of an apparatus for training a model according to an embodiment of this application.

FIG. 8 is a schematic structural diagram of an apparatus for generating a biometric image according to an embodiment of this application.

FIG. 9 is a block diagram of an electronic device configured to generate a biometric image according to an embodiment of this application.

FIG. 10 is a block diagram of an electronic device configured to train a model according to an embodiment of this application.

## DESCRIPTION OF EMBODIMENTS

Technical solutions in embodiments of this application will be described clearly and completely below in conjunction with accompanying drawings in the embodiments of this application. Apparently, the embodiments described are merely some embodiments rather than all embodiments of this application. All other embodiments derived by those of ordinary skill in the art from the embodiments of this application without creative efforts are to fall within the protection scope of this application.

Terms such as "first" and "second" in the description, the claims, and the accompanying drawings of this application are configured for distinguishing similar objects rather than describing a specific sequence or a sequential order. Data used in this way can be interchanged under appropriate circumstances, such that the embodiments of this application described herein can be implemented in a sequence other than those illustrated or described herein. In addition, terms "comprise", "include", "have", "has", and their any variation are intended to cover non-exclusive inclusions. For example, processes, methods, systems, products, or servers that include a series of steps or units are not necessarily limited to those steps or units clearly listed, but can include other steps or units not explicitly listed or inherent to these processes, methods, products, or devices.

In the embodiments of the present disclosure including the embodiments of both the claims and the specification, the term "module" or "unit" refers to a computer program or a part of the computer program having a predetermined function, works with other related parts to achieve a predetermined target, and may be implemented in whole or in part by using software, hardware (such as a processing circuit or a memory) or their combinations. Similarly, a processor (or a plurality of processors or memories) may be configured to implement one or more modules or units. Further, each module or unit may be a part of an entire module or unit that includes a function of the module or unit.

Artificial intelligence technology is a comprehensive subject, and may include pre-trained model technology, computer vision (CV) technology, machine learning/deep learning, etc. A pre-trained model, also referred to as a large model and a basic model, may be widely used in downstream tasks of artificial intelligence in all directions after fine-tuning. The computer vision technology is science of study on how to make a machine "see", further refers to machine vision for recognizing and measuring a target by using a camera and a computer, and further performs graphic processing. The computer processes graphics into an image that is more suitable for human eyes to observe or an instrument to detect after being transmitted to the instrument. The computer vision technology usually includes image processing, image recognition, image semantic understanding, image retrieval, etc. and biometric recognition technology such as face recognition and fingerprint recognition.

The solution according to the embodiment of this application relates to the computer vision technology, the deep learning, etc. in the artificial intelligence technology, and may specifically relate to the biometric identification technology such as palm print recognition, face recognition, and fingerprint recognition based on the computer vision technology, and biometric image generation based on the deep learning, etc. The solution is specifically described through embodiments as follows.

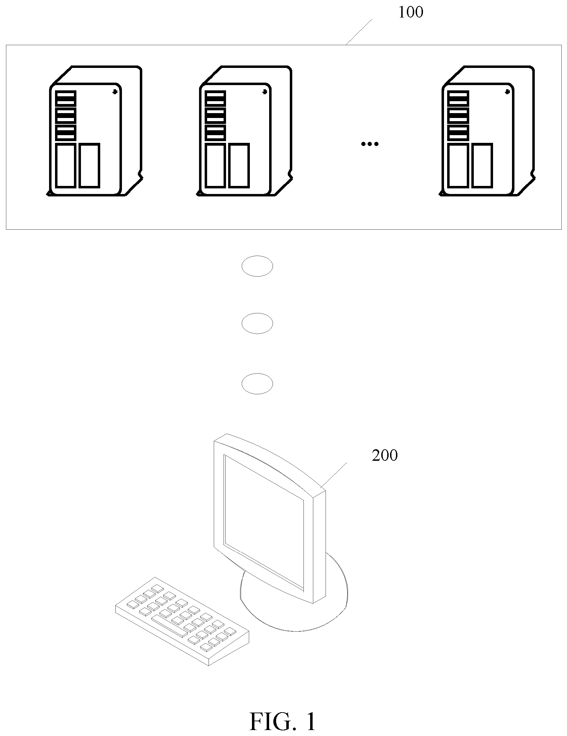

With reference to FIG. 1, FIG. 1 is a schematic diagram of an application environment according to the embodiment of this application. This application environment may at least include a server 100 and a terminal 200.

In all embodiments of the present disclosure, the server 100 may be configured to train a model. The server 100 may be an independent physical server, a server cluster or a distributed system composed of a plurality of physical servers, or a cloud server that provides a network computation service.

In all embodiments of the present disclosure, the terminal 200 may be configured to perform image generation based on an image generation model. Specifically, the terminal 200 may include, but is not limited to, a smartphone, a desktop computer, a tablet computer, a notebook computer, a smart speaker, a digital assistant, an augmented reality (AR)/virtual reality (VR) device, a smart wearable device, an in-vehicle terminal, a smart television, and another type of electronic devices. The terminal may alternatively be software running on the electronic device, such as an application and an applet. An operating system running on the electronic device in the embodiment of this application may include, but is not limited to, Android system, IOS system, linux, and windows.

In addition, FIG. 1 shows merely the application environment of a method for training a model and a method for generating a biometric image, and the embodiments of this description are not limited to that described above.

In all embodiments of the present disclosure, the server 100 and the terminal 200 may be directly or indirectly connected to each other through wired or wireless communication, which is not limited herein by this application.

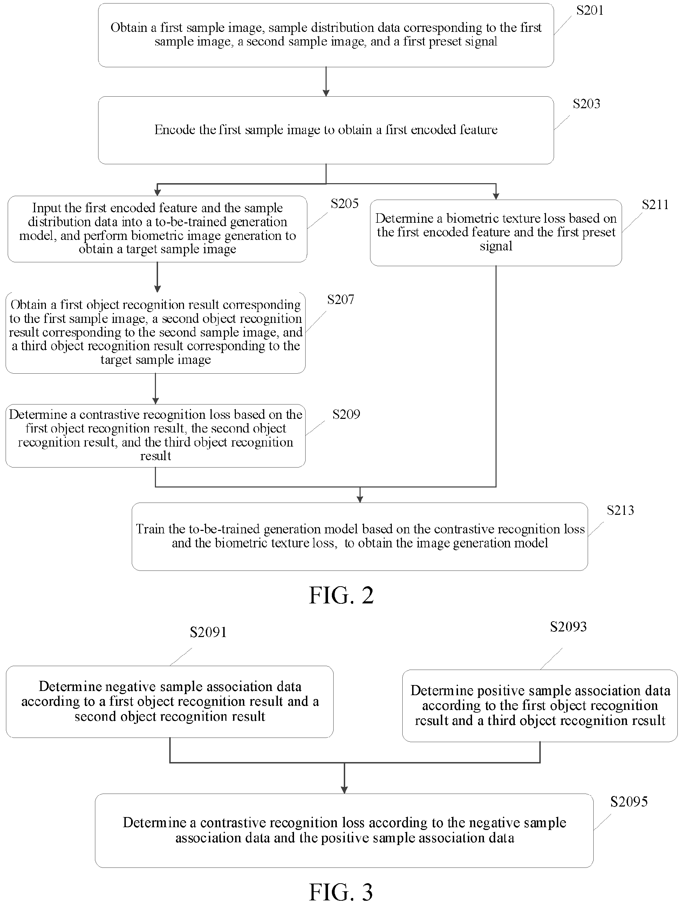

The method for training a model of this application will be described below. FIG. 2 is a schematic flowchart of the method for training a model according to the embodiment of this application. The method may be applied to the electronic devices such as the server and the terminal. Specifically, as shown in FIG. 2, the method may include the following operations:

S201: Obtain a first sample image, sample distribution data corresponding to the first sample image, a second sample image, and a first preset signal.

In all embodiments of the present disclosure, the first sample image may be an original biometric image of the first sample object, the second sample image may be an original biometric image of the second sample object, and the first sample object and the second sample object are different objects. In some embodiments, the first sample object may include a plurality of objects, and correspondingly, the first sample image may include an original biometric image of each of the plurality of objects. The second sample object may include at least one object, and correspondingly, the second sample image may include an original biometric image of each of the at least one object. Each object in the first sample object corresponds to one object in the second sample object, and the object, corresponding to any object in the first sample object, in the second sample object is different from the any object in the first sample object. Specifically, the object may be a user or a user account. Specifically, a biometric feature may be set in combination with actual application, such as palm prints, fingerprints, and faces.

In all embodiments of the present disclosure, the sample distribution data may represent a distribution of biometric line features in the first sample image. The so-called biometric line feature refers to a feature configured for indicating a biometric line, while the biometric line refers to a line that outlines a shape or a contour of a creature (object). In some embodiments, the sample distribution data may be a first Bezier curve image corresponding to the first sample image, and correspondingly, the sample distribution data are obtained by a method as follows:

determine control points corresponding to the biometric line features in the first sample image; and generate the first Bezier curve image based on the control points.

In all embodiments of the present disclosure, the first sample image may include at least one biometric line feature, each biometric line feature corresponds to one biometric line, and the first Bezier curve image may include a biometric line corresponding to the biometric line feature of the first sample image. In some embodiments, with the biometric feature being the palm prints as an example, correspondingly, the first Bezier curve image may include three main palm print lines and a plurality of secondary palm print lines.

In all embodiments of the present disclosure, the control points corresponding to each biometric line feature may include a start point, an end point, and at least one intermediate control point of a corresponding biometric line. Specifically, a number of the intermediate control points may be determined by a type of the Bezier curve (such as a first-order Bezier curve, a second-order Bezier curve, and a third-order Bezier curve), and the type of the Bezier curve may be set according to actual application requirements. Further, in a process of generating the Bezier curve in combination with the control points, an interpolation method may be combined to improve the Bezier curve, to obtain the first Bezier curve image.

In the embodiment, by taking the Bezier curve as the sample distribution data corresponding to the first sample object, the distribution of the biometric line features in the first sample image can be effectively reflected. Then, in a subsequent process of generating the realistic biometric image corresponding to the first sample object, an object identity can be identified in combination with the distribution of the biometric line features of the object, and then accuracy of the biometric image can be improved.

In all embodiments of the present disclosure, the first preset signal may be a signal conforming to a distribution of biometric texture features. In actual application, the distribution of the biometric texture (biometric muscle texture) features conforms to the Gaussian distribution, and correspondingly, the first preset signal may be a random Gaussian distribution signal.

S203: Encode the first sample image to obtain a first encoded feature.

In all embodiments of the present disclosure, the first sample image may be inputted into a pre-trained encoder, and encoding is performed to obtain the first encoded feature, or the first sample image may be inputted into a to-be-trained encoder, and encoding is performed to obtain the first encoded feature.

In all embodiments of the present disclosure, a specific structure of the to-be-trained encoder may be set according to actual application. In some embodiments, the to-be-trained encoder may be composed of three residual connection layers, and each residual connection layer is composed of a convolutional layer, a batchnormalization layer and a rectifying linear units layer. The first encoded feature may be the encoded feature of the first sample image (the feature after encoding on the first sample image by the to-be-trained encoder).

S205: Input the first encoded feature and the sample distribution data into a to-be-trained generation model, and perform biometric image generation to obtain a target sample image.

In all embodiments of the present disclosure, the target sample image may be a realistic biometric image corresponding to the first sample object (namely the biometric image of the first sample object generated by the to-be-trained generation model).

In all embodiments of the present disclosure, a model structure of the to-be-trained generation model may be set in combination with the actual application. In some embodiments, the to-be-trained generation model may include the to-be-trained encoder and a to-be-trained decoder that are connected to each other in sequence. Specifically, structures of the to-be-trained encoder and the to-be-trained decoder may be set in combination with the actual application.

S207: Obtain a first object recognition result corresponding to the first sample image, a second object recognition result corresponding to the second sample image, and a third object recognition result corresponding to the target sample image.

In all embodiments of the present disclosure, the target sample image, the first sample image, and the second sample image may be inputted into an object recognition model, and object recognition is performed, to obtain the first object recognition result corresponding to the first sample image, the second object recognition result corresponding to the second sample image, and the third object recognition result corresponding to the target sample image.

In all embodiments of the present disclosure, the object recognition model may be a pre-trained model configured to recognize the identity of the object. Specifically, the first object recognition result may be an object recognition result corresponding to the first sample image, the second object recognition result may be an object recognition result corresponding to the second sample image, and the third object recognition result may be an object recognition result corresponding to the target sample image. Specifically, the object recognition result may represent a probability that the biometric feature in a corresponding image belongs to a corresponding object.

In all embodiments of the present disclosure, the object recognition model may be pre-trained. Correspondingly, the method may further include the following operations:

obtain a third sample image and a preset object tag corresponding to the third sample image;

input the third sample image into a to-be-trained object recognition model, and perform object recognition to obtain a fourth object recognition result corresponding to the third sample image;

determine an object recognition loss according to the preset object tag and the fourth object recognition result; and

perform, based on the object recognition loss, the backpropagation training on the to-be-trained object recognition model, to obtain the object recognition model.

In all embodiments of the present disclosure, the third sample image may be an original biometric image of the third sample object. Specifically, the third sample object may include a plurality of sample objects, and correspondingly, the third sample image may include an original biometric image of each of the plurality of sample objects. The preset object tag corresponding to the third sample image may include a preset object tag corresponding to each sample object. The preset object tag may be configured for indicating an object to which the biometric feature in the third sample image belongs. In some embodiments, a number of the plurality of sample objects is assumed as N (namely N object categories), N being a positive integer. Correspondingly, each preset object tag is a vector of 1*N, and each element in the vector of 1*N corresponds to one of the plurality of sample objects. In the preset object tags corresponding to any sample object, the element corresponding to the any sample object is 1, and the other elements are 0.

In all embodiments of the present disclosure, the model structure of the to-be-trained object recognition model may be set in combination with actual application, and the fourth object recognition result may represent a probability that the biometric feature in a corresponding image belongs to a corresponding object.

In all embodiments of the present disclosure, the preset object tag and the fourth object recognition result may be substituted into a first preset loss function to determine the object recognition loss. The object recognition loss may represent an object recognition performance of a current object recognition to-be-trained model. Specifically, the first preset loss function may be set in combination with actual application, such as arcface (a loss function based on an angle cosine) and CosFace (a loss function based on cosine similarity).

In all embodiments of the present disclosure, the operation of performing, based on the object recognition loss, the backpropagation training on the to-be-trained object recognition model, to obtain the object recognition model may include: update a model parameter in the to-be-trained object recognition model in combination with a gradient descent method and the object recognition loss, repeat, based on the to-be-trained object recognition model with the model parameter updated, a first training iteration operation of inputting the third sample image into the to-be-trained object recognition mode, performing the object recognition, to obtain the fourth object recognition result corresponding to the third sample image, and updating the model parameter in the to-be-trained object recognition model until a first preset convergence condition is satisfied, and take the to-be-trained object recognition model when the first preset convergence condition is satisfied as a trained object recognition model.

In all embodiments of the present disclosure, satisfaction of the first preset convergence condition may be set in combination with actual application, such as a number of first training iteration operations performed reaching a preset number, and the object recognition loss less than a specified threshold, which may be set in combination with the training speed and model accuracy requirements.

In the embodiment, by training the to-be-trained object recognition model in combination with the original biometric image of the third sample object and the corresponding preset object tag, the object recognition performance of the trained object recognition model can be effectively guaranteed. Further, in the model training process, identity consistency of intra-class objects and the identity difference of inter-class objects can be constrained in combination with the object recognition model, and the effectiveness of the object biometric image generated by the image generation model can be improved.

S209: Determine a contrastive recognition loss based on the first object recognition result, the second object recognition result, and the third object recognition result.

In all embodiments of the present disclosure, the contrastive recognition loss is configured for constraining consistency between same objects and a difference between different objects.

In all embodiments of the present disclosure, as shown in FIG. 3, the operation of determining a contrastive recognition loss based on the first object recognition result, the second object recognition result, and the third object recognition result may include:

S2091: Determine negative sample association data according to the first object recognition result and the second object recognition result;

S2093: Determine positive sample association data according to the first object recognition result and the third object recognition result; and

S2095: Determine the contrastive recognition loss according to the negative sample association data and the positive sample association data.

In all embodiments of the present disclosure, the negative sample association data may represent a degree of association between object recognition results corresponding to different objects. In some embodiments, data that may reflect the degree of association between the first object recognition result and the second object recognition result, such as a cosine similarity between the first object recognition result and the second object recognition result, may be used as the negative sample association data.

In all embodiments of the present disclosure, the positive sample association data may represent a degree of association between different object recognition results corresponding to the same objects. In some embodiments, data that may reflect the degree of association between the first object recognition result and the third object recognition result, such as a cosine similarity between the first object recognition result and the third object recognition result, may be used as the positive sample association data.

In all embodiments of the present disclosure, the negative sample association data and the positive sample association data may be substituted into a contrastive loss function to determine the contrastive recognition loss. In all embodiments of the present disclosure, the contrastive loss function may be as follows:

$$\text{Loss\_dis} = a*(1-\text{pos\_sim}) + b*(\text{neg\_sim})$$

In the formula, Loss_dis may be the contrastive recognition loss, pos_sim may be the positive sample association data, neg_sim may be the negative sample association data, and A and B may be preset weights. In some embodiments, in the model training process, a and b may alternatively be adjusted in combination with the gradient descent method.

In the embodiment, the negative sample association data are determined in combination with the object recognition results corresponding to the original biometric images belonging to two different objects, and the positive sample association data are determined in combination with the object recognition results corresponding to the original biometric images and the realistic biometric image belonging to the same object. Then, according to the negative sample association data and the positive sample association data, the contrastive recognition loss configured for the backpropagation training on the model is determined. In this way, the image generation model can learn the consistency between the same objects and the difference between different objects, and then the effectiveness of the realistic biometric image generated by the image generation model can be greatly improved.

S211: Determine a biometric texture loss based on the first encoded feature and the first preset signal.

In all embodiments of the present disclosure, the first encoded feature and the first preset signal may be substituted into a second preset loss function to determine the biometric texture loss. The biometric texture loss may represent a difference between the first encoded feature and the first preset signal. Specifically, the second preset loss function may be set in combination with actual application, such as Kullback-Leibler loss function (KL, a measurement method for measuring a difference between two probability distributions).

S213: Train the to-be-trained generation model based on the contrastive recognition loss and the biometric texture loss, to obtain the image generation model.

In all embodiments of the present disclosure, the image generation model may be a trained to-be-trained generation model, and the image generation model may be configured to generate a realistic biometric image corresponding to any object.

In all embodiments of the present disclosure, in operation S213, a target loss may be determined according to the contrastive recognition loss and biometric texture loss, and then the backpropagation training is performed on the to-be-trained generation model based on the target loss, to obtain the image generation model.

Alternatively, in a case that the first encoded feature configured for determining the biometric texture loss is generated by the to-be-trained encoder, the to-be-trained generation model and the to-be-trained encoder may be jointly trained based on the contrastive recognition loss and the biometric texture loss, to obtain the image generation model corresponding to the to-be-trained generation model. The image generation model is a to-be-trained generation model after joint training. Through joint training, the to-be-trained encoder can learn the texture encoded feature conforming to the Gaussian distribution under the constraint of the biometric texture loss, and transmit the texture encoded feature conforming to the Gaussian distribution to the to-be-trained generation model. In this way, the to-be-trained generation model can master a capacity to learn texture features from the Gaussian distribution on the premise of learning the biometric line feature of the object from the sample distribution data, and the accuracy of the representation of the biometric feature of the object through the image generation model obtained through training can be further improved.

In all embodiments of the present disclosure, the operation of jointly training the to-be-trained generation model and the to-be-trained encoder based on the contrastive recognition loss and the biometric texture loss, to obtain the image generation model may include:

determine a target loss according to the contrastive recognition loss and the biometric texture loss; and

perform, based on the target loss, backpropagation training on the to-be-trained generation model and the to-be-trained encoder to obtain the image generation model.

In all embodiments of the present disclosure, the contrastive recognition loss and the biometric texture loss may be subjected to weighted sum to obtain the target loss. Specifically, respective weights of the contrastive recognition loss and the biometric texture loss may be preset in combination with the actual application requirements. In an exemplary model training process, the respective weights of the contrastive recognition loss and the biometric texture loss may be adjusted in combination with the gradient descent method.

In all embodiments of the present disclosure, the operation of performing, based on the target loss, backpropagation training on the to-be-trained generation model and the to-be-trained encoder to obtain the image generation model may include: update a model parameter in the to-be-trained generation model and an encoding parameter in the to-be-trained encoder in combination with the gradient descent method and the target loss, repeat, based on the to-be-trained generation model with the model parameter update and the to-be-trained encoder with the encoding parameter updated, a second training iteration operation of inputting the first sample image into the to-be-trained encoder, performing encoding to obtain the first encoded feature, and updating the model parameter in the to-be-trained generation model and the encoding parameter in the to-be-trained encoder until a second preset convergence condition is satisfied, and take the to-be-trained generation model when the second preset convergence condition is satisfied (namely the to-be-trained generation model after joint training) as the trained image generation model.

In all embodiments of the present disclosure, for specific details of satisfying the second preset convergence condition, reference can be made to the related details of satisfying the first preset convergence condition, which is not repeated herein.

In combination with the target loss determined according to the contrastive recognition loss and the biometric texture loss, the to-be-trained generation model and the to-be-trained encoder are subjected to the backpropagation training, and then the to-be-trained encoder can learn the texture encoded feature conforming to the Gaussian distribution. In the training process, the texture encoded feature conforming to the Gaussian distribution is transmitted to the to-be-trained generation model. In this way, the to-be-trained generation model can master a capacity to learn texture features from the Gaussian distribution on the premise of learning the biometric line feature of the object from the sample distribution data, and the accuracy of the biometric representation of the object through the generation model can be further improved. In addition, the image generation model can learn the consistency between the same objects and the difference between different objects in combination with the contrastive recognition loss in the target loss, and the effectiveness of the realistic biometric image generated by the image generation model can be further improved.

In all embodiments of the present disclosure, the operation of determining a biometric texture loss based on the first encoded feature and the first preset signal may include:

input the first encoded feature into a to-be-trained dimension-reduction model, and perform dimension reduction to obtain a second encoded feature; and

determine the biometric texture loss based on the second encoded feature and the first preset signal.

Correspondingly, the operation of jointly training the to-be-trained generation model and the to-be-trained encoder based on the contrastive recognition loss and the biometric texture loss, to obtain the image generation model may include:
jointly train the to-be-trained generation model, the to-be-trained encoder, and the to-be-trained dimension-reduction model based on the contrastive recognition loss and the biometric texture loss, to obtain the image generation model.

In all embodiments of the present disclosure, a model structure of the to-be-trained dimension-reduction model may be set in combination with actual application, such as a fully connected layer. The second encoded feature may be an encoded feature after dimension reduction of the first encoded feature. Specifically, in the embodiment where the biometric texture loss is determined based on the first encoded feature and the first preset signal, the first preset signal consistent in dimension with the first encoded feature may be generated. In some embodiments, in the embodiment where the biometric texture loss is determined based on the second encoded feature and the first preset signal, the first preset signal consistent in dimension with the second encoded feature may be generated.

In all embodiments of the present disclosure, for specific details of determining the biometric texture loss based on the second encoded feature and the first preset signal, reference can be made to specific details of determining the biometric texture loss based on the first encoded feature and the first preset signal, which is not repeated herein.

In all embodiments of the present disclosure, for specific details of jointly training the to-be-trained generation model, the to-be-trained encoder, and the to-be-trained dimension-reduction model based on the contrastive recognition loss and the biometric texture loss, to obtain the image generation model, reference can be made to specific details of jointly training the to-be-trained generation model and the to-be-trained encoder based on the contrastive recognition loss and the biometric texture loss, to obtain the image generation model, which is not repeated herein.

In the embodiment, the first encoded feature is subjected to dimension reduction, and then the biometric texture loss is determined. The effectiveness of the encoded feature configured for calculating the biometric texture loss can be improved, and learning the biometric texture feature by the to-be-trained encoder can be further better constrained. Moreover, a feature dimension of the corresponding encoded feature can be effectively reduced through the dimension reduction. In this way, the feature dimension of the encoded feature configured for determining the biometric texture loss can be reduced, an amount of data processing can be reduced, processing resources can be saved, and efficiency of determining the biometric texture loss can be increased.

The method may further include the following operations: obtain target distribution data corresponding to a target object and a second preset signal; and input the target distribution data and the second preset signal into the image generation model, and perform biometric image generation to obtain a target image.

In all embodiments of the present disclosure, the target object may be an object that is to generate a realistic biometric image, the target distribution data may represent a distribution of biometric line features in an original biometric image of the target object, and the second preset signal may be a signal conforming to the distribution of biometric texture features. In all embodiments of the present disclosure, the target distribution data are a second Bezier curve image corresponding to the target object, which can be made reference to specific details of generating the first Bezier curve image.

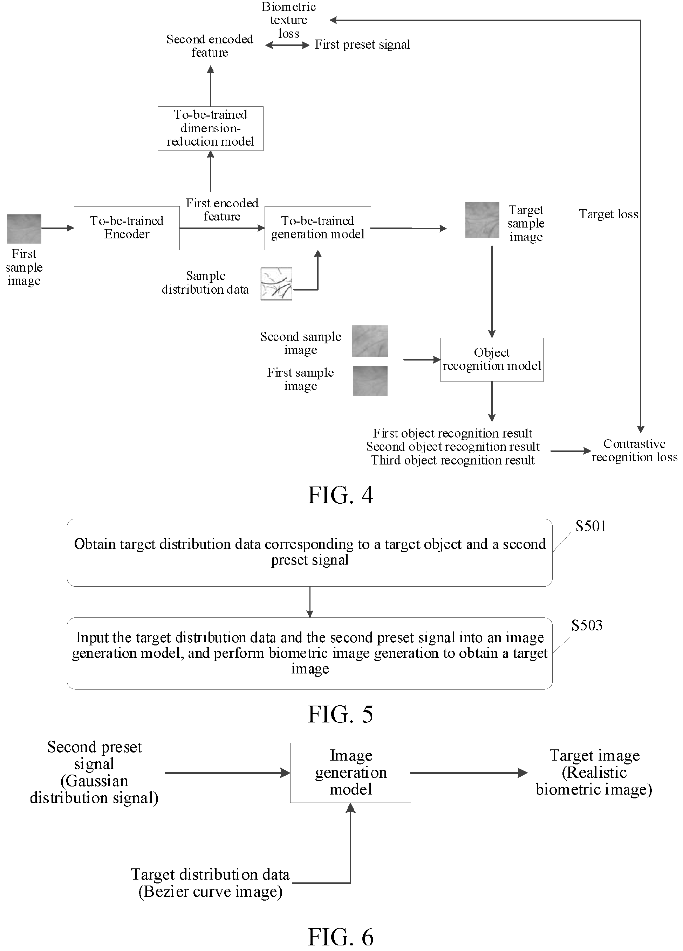

In all embodiments of the present disclosure, with the biometric feature being the palm prints as an example, as shown in FIG. 4, FIG. 4 is a schematic diagram of a model training process according to an exemplary embodiment. Specifically, the first sample image (the original palm print image of the first sample object) may be inputted into the to-be-trained encoder, encoding is performed to obtain the first encoded feature. The first encoded feature and sample distribution data (the Bezier curve image corresponding to the first sample object) may be inputted into the to-be-trained generation model, and palm print image generation is performed, to obtain the target sample image (the realistic palm print image corresponding to the first sample object). Specifically, the to-be-trained generation model includes the to-be-trained encoder and the to-be-trained decoder. After the first encoded feature and the Bezier curve image corresponding to the first sample object are inputted into the to-be-trained encoder for being encoded, the encoded feature is inputted into the to-be-trained decoder for being decoded, to obtain the realistic palm print image corresponding to the first sample object. The realistic palm print image corresponding to the first sample object, the original palm print image of the first sample object, and an original palm print image of a second sample object (the second sample image) are inputted into the object recognition model, and object recognition is performed to obtain a first object recognition result, a second object recognition result, and a third object recognition result. A contrastive recognition loss is determined based on the first object recognition result, the second object recognition result, and the third object recognition result. In addition, the first encoded feature is inputted into the to-be-trained dimension-reduction model, and dimension reduction is performed to obtain a second encoded feature. The biometric texture loss is determined based on the second encoded feature and the first preset signal. The target loss is determined based on the contrastive recognition loss and the biometric texture loss, and based on the target loss, the to-be-trained generation model, the to-be-trained encoder, and the to-be-trained dimension-reduction model are jointly trained to obtain the image generation model.

According to the technical solution provided by the embodiment of this description, in a model training process of generating the realistic biometric image of this description, the original biometric image of the first sample object is inputted into the to-be-trained encoder, encoding is performed to obtain the first encoded feature, and the biometric texture loss is determined based on the first encoded feature and the first preset signal conforming to the distribution of the biometric texture features. In addition, the first encoded feature and the sample distribution data representing the distribution of the biometric line features corresponding to the first sample object are inputted into the to-be-trained generation model, and the biometric image generation is performed, to obtain the realistic biometric image corresponding to the first sample object. The realistic biometric image corresponding to the first sample object, the original biometric image of the first sample object, and the original biometric image of the second sample object are inputted into the object recognition model, and object recognition is performed to obtain the first object recognition result corresponding to the original biometric image of the first sample object, the second object recognition result corresponding to the original biometric image of the second sample object, and the third object recognition result corresponding to the realistic biometric image of the first sample object. The contrastive recognition loss configured for constraining the consistency between the same objects and the difference between different objects is determined in combination with the object recognition results. The to-be-trained generation model and the to-be-trained encoder are jointly trained based on the contrastive recognition loss and the biometric texture loss. In this way, under a constraint of the biometric texture loss, the to-be-trained encoder can learn the texture encoded feature conforming to the Gaussian distribution. In the training process, the texture encoded feature conforming to the Gaussian distribution is transmitted to the to-be-trained generation model. In this way, the to-be-trained generation model can master a capacity to learn texture features from the Gaussian distribution on the premise of learning the biometric line feature of the object from the sample distribution data, and the accuracy of the biometric representation of the object through the generation model can be further improved. In addition, under a constraint of the contrastive recognition loss, the image generation model can also learn the consistency between the same objects and the difference between different objects. The accuracy of the biometric representation can be better improved, and the effectiveness of the realistic biometric image generated by the image generation model as well as the subsequent recognition accuracy and effectiveness of the object recognition model trained based on the generated realistic biometric image can be better improved accordingly.

The method for generating a biometric image of this application will be described below. FIG. 5 is a schematic flowchart of the method for generating a biometric image according to the embodiment of this application. The method may be applied to the electronic devices such as the server and the terminal. Specifically, as shown in FIG. 5, the method may include the following operations:

S501: Obtain target distribution data corresponding to a target object and a second preset signal.

In all embodiments of the present disclosure, the target object may be an object that is to generate a realistic biometric image. The target distribution data may represent a distribution of biometric line features in an original biometric image of the target object. In all embodiments of the present disclosure, the target distribution data are a second Bezier curve image corresponding to the target object, and the target distribution data are obtained by a method as follows:

obtain an original image corresponding to the target object, the original image being the original biometric image of the target object;

determine control points corresponding to biometric line features in the original image; and

generate the second Bezier curve image based on the control points.

In all embodiments of the present disclosure, for specific details of generating the second Bezier curve image in combination with the original image (original biometric image) corresponding to the target object, reference can be made to specific details of generating the first Bezier curve image in combination with the first sample image, which is not repeated herein.

In the embodiment, by taking the Bezier curve as the target distribution data corresponding to the target object, the distribution of the biometric line features corresponding to the target object can be effectively reflected. Then, in a subsequent process of generating the realistic biometric image corresponding to the target object, an identity of the target object can be identified in combination with the distribution of the biometric line features of the object.

In all embodiments of the present disclosure, the second preset signal may be a signal conforming to the distribution of biometric texture features. In actual application, the distribution of the biometric texture (biometric muscle texture) features conforms to the Gaussian distribution, and correspondingly, the second preset signal may be a random Gaussian distribution signal.

S503: Input the target distribution data and the second preset signal into an image generation model, and perform biometric image generation to obtain a target image.

In all embodiments of the present disclosure, the target image may be a realistic biometric image corresponding to the target object. The image generation model is obtained by training a to-be-trained model based on a contrastive recognition loss and a biometric texture loss, the contrastive recognition loss is determined based on a first object recognition result corresponding to a first sample image, a second object recognition result corresponding to a second sample image, and a third object recognition result corresponding to a target sample image, and the contrastive recognition loss is configured for constraining consistency between same objects and a difference between different objects. The first sample image is an original biometric image of the first sample object, the second sample image is an original biometric image of the second sample object, the target sample image is obtained through biometric image generation by the to-be-trained generation model based on sample distribution data and a first encoded feature obtained by encoding the first sample image, and the sample distribution data represent a distribution of biometric line features in the first sample image. The biometric texture loss is determined based on the first encoded feature and a first preset signal, and the first preset signal is a signal conforming to the distribution of the biometric texture features.

In all embodiments of the present disclosure, for specific details of model training, reference can be made to the related details described above, which is not repeated herein.

In all embodiments of the present disclosure, after a large number of realistic biometric images are generated based on the image generation model, the object recognition model in a corresponding scenario can be trained in combination with the large number of realistic biometric images, to better train the object recognition model with better recognition effect, and further improve the object recognition effect in a corresponding object recognition scenario.

In all embodiments of the present disclosure, as shown in FIG. 6, FIG. 6 is a schematic diagram of a biometric image generation process according to an embodiment of this application. Specifically, the second preset signal and the target distribution data corresponding to the target object may be inputted into the image generation model, and biometric image generation may be performed, to obtain the target image (the realistic biometric image corresponding to the target object).

According to the technical solution provided by the embodiment of the description, the second preset signal and the target distribution data corresponding to the target object are inputted into the image generation model for image generation in the description. The image generation model is obtained by training the to-be-trained generation model based on the contrastive recognition loss and the biometric texture loss, such that the consistency between the same objects and the differences between different objects can be learned on the premise of effectively learning the biometric texture features and the biometric line features. The accuracy of the biometric representation can be greatly improved, and the effectiveness of the realistic biometric image generated by the image generation model as well as the subsequent recognition accuracy and effectiveness of the object recognition model trained based on the generated realistic biometric image can be better improved accordingly.

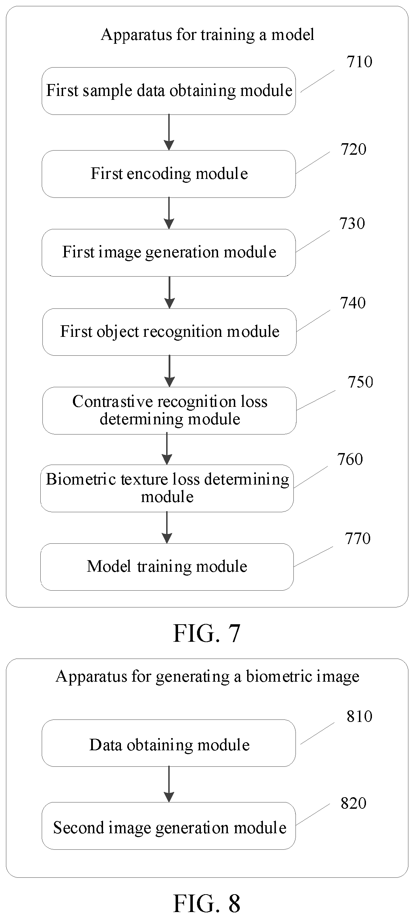

The embodiments of this application further provide an apparatus for training a model. As shown in FIG. 7, the apparatus includes:

a first sample data obtaining module 710 configured to obtain a first sample image, sample distribution data corresponding to the first sample image, a second sample image, and a first preset signal, the first sample image being an original biometric image of a first sample object, the second sample image being an original biometric image of a second sample object, the sample distribution data representing a distribution of biometric line features in the first sample image, and the first preset signal being a signal conforming to a distribution of biometric texture features;

a first encoding module 720 configured to encode the first sample image to obtain a first encoded feature;

a first image generation module 730 configured to input the first encoded feature and the sample distribution data into a to-be-trained generation model, and perform biometric image generation to obtain a target sample image, the target sample image being a realistic biometric image corresponding to the first sample object;

a first object recognition module 740 configured to obtain a first object recognition result corresponding to the first sample image, a second object recognition result corresponding to the second sample image, and a third object recognition result corresponding to the target sample image;

a contrastive recognition loss determining module 750 configured to determine a contrastive recognition loss based on the first object recognition result, the second object recognition result, and the third object recognition result, the contrastive recognition loss being configured for constraining consistency between same objects and a difference between different objects;

a biometric texture loss determining module 760 configured to determine a biometric texture loss based on the first encoded feature and the first preset signal; and

a model training module 770 configured to train the to-be-trained generation model based on the contrastive recognition loss and the biometric texture loss, to obtain an image generation model, the image generation model being configured to generate a realistic biometric image of any object.

In all embodiments of the present disclosure, the contrastive recognition loss determining module 750 includes:

a negative sample association data determining unit configured to determine negative sample association data according to the first object recognition result and the second object recognition result, the negative sample association data representing a degree of association between object recognition results corresponding to different objects;

a positive sample association data determining unit configured to determine positive sample association data according to the first object recognition result and the third object recognition result, the positive sample association data representing a degree of association between different object recognition results corresponding to the same objects; and

a contrastive recognition loss determining unit configured to determine the contrastive recognition loss according to the negative sample association data and the positive sample association data.

In all embodiments of the present disclosure, the first encoding module 720 is configured to encode the first sample image to obtain a first encoded feature, and specifically configured to input the first sample image into a to-be-trained encoder, and perform encoding to obtain the first encoded feature.

The model training module 770 is configured to train the to-be-trained generation model based on the contrastive recognition loss and the biometric texture loss, to obtain an image generation model, and specifically configured to jointly train the to-be-trained generation model and the to-be-trained encoder based on the contrastive recognition loss and the biometric texture loss, to obtain the image generation model, the image generation model being a to-be-trained generation model after joint training.

In all embodiments of the present disclosure, the biometric texture loss determining module 760 includes:

a dimension reduction unit configured to input the first encoded feature into a to-be-trained dimension-reduction model, and perform dimension reduction to obtain a second encoded feature; and

a biometric texture loss determining unit configured to determine a biometric texture loss based on the second encoded feature and the first preset signal.

The model training module 770 is further configured to jointly train the to-be-trained generation model, the to-be-trained encoder, and the to-be-trained dimension-reduction model based on the contrastive recognition loss and the biometric texture loss, to obtain the image generation model.

In all embodiments of the present disclosure, the sample distribution data are a first Bezier curve image corresponding to the first sample image, and correspondingly, the sample distribution data are obtained through modules as follows:

a first control point determining module configured to determine control points corresponding to the biometric line features in the first sample image; and

a first Bezier curve image generation module configured to generate the first Bezier curve image based on the control points.

In all embodiments of the present disclosure, the model training module 770 includes:

a target loss determining unit configured to determine a target loss according to the contrastive recognition loss and the biometric texture loss; and

a backpropagation training unit configured to perform, based on the target loss, backpropagation training on the to-be-trained generation model and the to-be-trained encoder to obtain the image generation model.

In all embodiments of the present disclosure, the first object recognition module 740 is configured to obtain a first object recognition result corresponding to the first sample image, a second object recognition result corresponding to the second sample image, and a third object recognition result corresponding to the target sample image, and specifically configured to input the target sample image, the first sample image, and the second sample image into an object recognition model, and perform object recognition to obtain the first object recognition result corresponding to the first sample image, the second object recognition result corresponding to the second sample image, and the third object recognition result corresponding to the target sample image.

In all embodiments of the present disclosure, the apparatus further includes:

a first sample data obtaining module configured to obtain a third sample image and a preset object tag corresponding to the third sample image, the third sample image being an original biometric image of the third sample object;

a second object recognition module configured to input the third sample image into a to-be-trained object recognition model, and perform object recognition to obtain a fourth object recognition result corresponding to the third sample image;

an object recognition loss determining module configured to determine an object recognition loss according to the preset object tag and the fourth object recognition result; and

a backpropagation training module configured to perform, based on the object recognition loss, the backpropagation training on the to-be-trained object recognition model, to obtain the object recognition model.

With respect to the apparatus in the embodiment described above, specific methods by which the modules perform operations have been described in detail in the embodiments related to the method, and are not described in detail herein.

The embodiments of this application further provide an apparatus for generating a biometric image. As shown in FIG. 8, the apparatus includes:

a data obtaining module 810 configured to obtain target distribution data corresponding to a target object and a second preset signal, the target distribution data representing a distribution of biometric line features in an original biometric image of the target object, and the second preset signal being a signal conforming to a distribution of biometric texture features; and

a second image generation module 820 configured to input the target distribution data and the second preset signal into an image generation model, and perform biometric image generation to obtain a target image, the target image being a realistic biometric image corresponding to the target object; and

the image generation model being obtained by training a to-be-trained model based on a contrastive recognition loss and a biometric texture loss, the contrastive recognition loss being determined based on a first object recognition result corresponding to a first sample image, a second object recognition result corresponding to a second sample image, and a third object recognition result corresponding to a target sample image, and the contrastive recognition loss being configured for constraining consistency between same objects and a difference between different objects; the first sample image being an original biometric image of the first sample object, the second sample image being an original biometric image of the second sample object, the target sample image being obtained through biometric image generation by the to-be-trained generation model based on sample distribution data and a first encoded feature obtained by encoding the first sample image, and the sample distribution data representing a distribution of biometric line features in the first sample image; and the biometric texture loss being determined based on the first encoded feature and a first preset signal, and the first preset signal being a signal conforming to the distribution of the biometric texture features.

In all embodiments of the present disclosure, the target distribution data are a second Bezier curve image corresponding to the target object, and the target distribution data are obtained through modules as follows:

an original image obtaining module configured to obtain an original image corresponding to the target object, the original image being the original biometric image of the target object;

a second control point determining module configured to determine control points corresponding to biometric line features in the original image; and

a second Bezier curve image generation module configured to generate the second Bezier curve image based on the control points.

With respect to the apparatus in the embodiment described above, specific methods by which the modules perform operations have been described in detail in the embodiments related to the method, and are not described in detail herein.

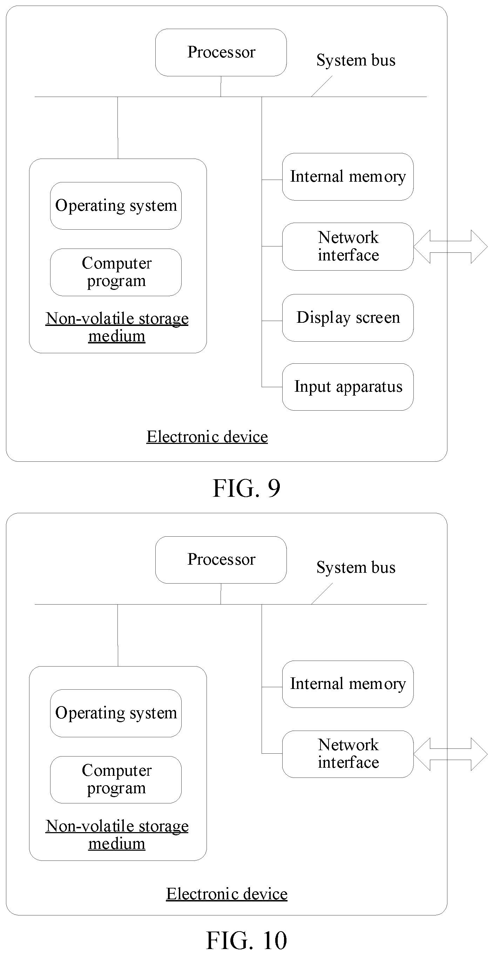

FIG. 9 is a block diagram of an electronic device configured to generate biometric images according to the embodiment of this application. The electronic device may be a terminal, and its internal structure diagram may be as shown in FIG. 9. The electronic device includes a processor, a memory, a network interface, a display screen, and an input apparatus that are connected through a system bus. The processor of the electronic device is configured to provide computing and control capabilities. The memory of the electronic device includes a non-volatile storage medium and an internal memory. The non-volatile storage medium stores an operating system and a computer program. The internal memory provides an environment for running of the operating system and the computer program in the non-volatile storage medium. The network interface of the electronic device is configured to communicate with an external terminal through networking. The computer program, when executed by the processor, implements the method for generating a biometric image. The display screen of the electronic device may be a liquid crystal display screen or an electronic ink display screen. The input apparatus of the electronic device may be a touch layer covering the display screen, or may be a button, a trackball, or a touch pad arranged on a shell of the electronic device, or may be an external keyboard, a touch pad, or a mouse.

FIG. 10 is a block diagram of an electronic device configured to train a model according to the embodiment of this application. The electronic device may be a server and its internal structure diagram may be as shown in FIG. 10. The electronic device includes a processor, a memory, and a network interface that are connected through a system bus. The processor of the electronic device is configured to provide computing and control capabilities. The memory of the electronic device includes a non-volatile storage medium and an internal memory. The non-volatile storage medium stores an operating system and a computer program. The internal memory provides an environment for running of the operating system and the computer program in the non-volatile storage medium. The network interface of the electronic device is configured to communicate with an external terminal through networking. The computer program, when executed by the processor, implements the method for training a model.

For those of ordinary skill in the art, the structure shown in FIG 9 or FIG. 10 is merely a block diagram of some structures related to the solution of the present disclosure, and do not constitute limitation to the electronic device to which the solution of the present disclosure is applied. The specific electronic device may include more or less components than those shown in the figure, or combine some components, or have different component arrangements.

In all embodiments of the present disclosure, an electronic device is further provided. The electronic device includes: a processor, and a memory configured to store a processor-executable instruction, the processor being configured to execute the instruction stored in the memory, to implement the method for training a model or the method for generating a biometric image in the embodiments of the present disclosure.

In all embodiments of the present disclosure, a computer-readable storage medium is further provided. An instruction in the storage medium, when executed by a processor of an electronic device, causes the electronic device to perform the method for training a model or the method for generating a biometric image in the embodiments of the present disclosure.

In all embodiments of the present disclosure, a computer program product or a computer program is further provided. The computer program product or the computer program includes a computer instruction stored in a computer-readable storage medium. A processor of a computer device reads the computer instruction from the computer-readable storage medium, and the processor executes the computer instruction, to cause the computer device to perform the method for training a model or the method for generating a biometric image according to various exemplary implementations described above.

In all embodiments of the present disclosure, when user-related data, such as biometric images including palm print images, are applied to a specific product or technology in the embodiments described above of this application, an approval or consent from the user is required, and collection, use, and processing of relevant data need to comply with relevant laws, regulations and standards of relevant countries and regions.

For those of ordinary skill in the art, all or some processes implementing the method in the embodiment described above can be implemented by instructing related hardware by the computer program. The computer program may be stored in a non-volatile computer-readable storage medium, and the computer program, when executed, may include the processes of the method embodiments described above. Any reference to the memory, the storage, the database, or another medium used in the embodiments according to this application may include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a rambus direct RAM (RDRAM), a direct rambus dynamic RAM (DRDRAM), and a rambus dynamic RAM (RDRAM).

Those of ordinary skill in the art will readily conceive of other implementation solutions of the present disclosure after considering the description and implementing a disclosure disclosed herein. This application is intended to cover any modification, use, or adaptive change of the present disclosure. The modification, use, or adaptive change of this application follows general principles of the present disclosure and includes common general knowledge or conventional technical means in the technical field not disclosed in the present disclosure. The description and the embodiments are merely exemplary, and a true scope and spirit of the present disclosure are indicated by the claims.

The present disclosure is not limited to precise structures described above and shown in the accompanying drawings, and various alterations and changes can be made without departing from the scope of the present disclosure. The scope of the present disclosure is merely limited by the appended claims.

**Claims**

1. A model training method, comprising:

   obtaining a first biometric image, sample distribution data, a second biometric image, and a first preset signal, the first biometric image indicating a first sample object, the second biometric image indicating a second sample object, the sample distribution data representing a distribution of biometric line features in the first biometric image, and the first preset signal indicating biometric texture features;
   encoding the first biometric image to obtain a first encoded feature;

inputting the first encoded feature and the sample distribution data into an initial generation model, and performing biometric image generation to obtain a target sample image;

obtaining a first object recognition result corresponding to the first biometric image, a second object recognition result corresponding to the second biometric image, and a third object recognition result corresponding to the target sample image;

determining a contrastive recognition loss based on the first object recognition result, the second object recognition result, and the third object recognition result, the contrastive recognition loss being configured for characterizing consistency between the first object recognition result and the third object recognition result and a difference between the first object recognition result and the second object recognition result;

determining a biometric texture loss based on the first encoded feature and the first preset signal; and

training the initial generation model based on the contrastive recognition loss and the biometric texture loss, to obtain an image generation model, the image generation model being configured to generate a realistic biometric image of any object.

2. The method according to claim 1, wherein the determining a contrastive recognition loss based on the first object recognition result, the second object recognition result, and the third object recognition result comprises:

determining negative sample association data according to the first object recognition result and the second object recognition result, the negative sample association data representing a degree of association between object recognition results corresponding to different objects;

determining positive sample association data according to the first object recognition result and the third object recognition result, the positive sample association data representing a degree of association between different object recognition results corresponding to the same objects; and

determining the contrastive recognition loss according to the negative sample association data and the positive sample association data.

3. The method according to claim 1 or 2, wherein the encoding the first biometric image to obtain a first encoded feature comprises: inputting the first biometric image into a to-be-trained encoder, and performing encoding to obtain the first encoded feature;

and

the training the initial generation model based on the contrastive recognition loss and the biometric texture loss, to obtain an image generation model comprises: jointly training the initial generation model and the to-be-trained encoder based on the contrastive recognition loss and the biometric texture loss, to obtain the image generation model, the image generation model being the initial generation model after joint training.

4. The method according to claim 3, wherein the determining a biometric texture loss based on the first encoded feature and the first preset signal comprises:

inputting the first encoded feature into a to-be-trained dimension-reduction model, and performing dimension reduction to obtain a second encoded feature; and

determining the biometric texture loss based on the second encoded feature and the first preset signal; and

the jointly training the initial generation model and the to-be-trained encoder based on the contrastive recognition loss and the biometric texture loss, to obtain the image generation model comprises:

jointly training the initial generation model, the to-be-trained encoder, and the to-be-trained dimension-reduction model based on the contrastive recognition loss and the biometric texture loss, to obtain the image generation model

5. The method according to any one of claims 1 to 4, wherein the sample distribution data are a first Bezier curve image corresponding to the first biometric image, and the sample distribution data is obtained by a method as follows:

determining control points corresponding to the biometric line features in the first biometric image; and

generating the first Bezier curve image based on the control points.

6. The method according to claim 3, wherein the jointly training the initial generation model and the to-be-trained encoder based on the contrastive recognition loss and the biometric texture loss, to obtain the image generation model comprises:

determining a target loss according to the contrastive recognition loss and the biometric texture loss; and

performing, based on the target loss, backpropagation training on the initial generation model and the to-be-trained encoder to obtain the image generation model.

7. The method according to any one of claims 1 to 6, wherein the obtaining a first object recognition result corresponding to the first biometric image, a second object recognition result corresponding to the second biometric image, and a third object recognition result corresponding to the target sample image comprises:

inputting the target sample image, the first biometric image, and the second biometric image into an object recognition model, and performing object recognition to obtain the first object recognition result corresponding to the first biometric image, the second object recognition result corresponding to the second biometric image, and the third object recognition result corresponding to the target sample image; wherein the method further comprises:

obtaining a third biometric image and a preset object tag corresponding to the third biometric image, the third biometric image indicating a third sample object; inputting the third biometric image into a to-be-trained object recognition model, and performing object recognition to obtain a fourth object recognition result corresponding to the third biometric image; determining an object recognition loss according to the preset object tag and the fourth object recognition result; and performing, based on the object recognition loss, the backpropagation training on the to-be-trained object recognition model, to obtain the object recognition model.

8. A biometric image generation method, comprising:

obtaining target distribution data corresponding to a target object and a second preset signal, the target distribution data representing a distribution of biometric line features in an original biometric image of the target object, and the second preset signal indicating biometric texture features; and inputting the target distribution data and the second preset signal into an image generation model, and performing biometric image generation to obtain a target image, the target image being a realistic biometric image corresponding to the target object; and the image generation model being obtained by training a to-be-trained model based on a contrastive recognition loss and a biometric texture loss, the contrastive recognition loss being determined based on a first object recognition result corresponding to a first biometric image, a second object recognition result corresponding to a second biometric image, and a third object recognition result corresponding to a target sample image, and the contrastive recognition loss being configured for characterizing consistency between the first object recognition result and the third object recognition result and a difference between the first object recognition result and the second object recognition result; the first biometric image indicating the first sample object, the second biometric image indicating the second sample object, the target sample image being obtained through biometric image generation by an initial generation model based on sample distribution data and a first encoded feature obtained by encoding the first biometric image, and the sample distribution data representing a distribution of biometric line features in the first biometric image; and the biometric texture loss being determined based on the first encoded feature and a first preset signal, and the first preset signal being a signal conforming to the distribution of the biometric texture features.

9. The method according to claim 8, wherein the target distribution data are a second Bezier curve image corresponding to the target object, and the target distribution data are obtained by a method as follows:

obtaining an original image corresponding to the target object, the original image being the original biometric image of the target object; determining control points corresponding to biometric line features in the original image; and generating the second Bezier curve image based on the control points.

10. A model training apparatus, comprising:

a first sample data obtaining module configured to obtain a first biometric image, sample distribution data, a second biometric image, and a first preset signal, the first biometric image indicating a first sample object, the second biometric image indicating a second sample object, the sample distribution data representing a distribution of biometric line features in the first biometric image, and the first preset signal indicating biometric texture features; a first encoding module configured to encode the first biometric image to obtain a first encoded feature; a first image generation module configured to input the first encoded feature and the sample distribution data into an initial generation model, and perform biometric image generation to obtain a target sample image;

a first object recognition module configured to obtain a first object recognition result corresponding to the first biometric image, a second object recognition result corresponding to the second biometric image, and a third object recognition result corresponding to the target sample image;

a contrastive recognition loss determining module configured to determine a contrastive recognition loss based on the first object recognition result, the second object recognition result, and the third object recognition result, the contrastive recognition loss being configured for characterizing consistency between the first object recognition result and the third object recognition result and a difference between the first object recognition result and the second object recognition result;

a biometric texture loss determining module configured to determine a biometric texture loss based on the first encoded feature and the first preset signal; and

a model training module configured to train the initial generation model based on the contrastive recognition loss and the biometric texture loss, to obtain an image generation model, the image generation model being configured to generate a realistic biometric image of any object.

11. A biometric image generation apparatus, comprising:

a data obtaining module configured to obtain target distribution data corresponding to a target object and a second preset signal, the target distribution data representing a distribution of biometric line features in an original biometric image of the target object, and the second preset signal indicating biometric texture features; and

a second image generation module configured to input the target distribution data and the second preset signal into an image generation model, and perform biometric image generation to obtain a target image, the target image being a realistic biometric image corresponding to the target object; and

the image generation model being obtained by training a to-be-trained model based on a contrastive recognition loss and a biometric texture loss, the contrastive recognition loss being determined based on a first object recognition result corresponding to a first biometric image, a second object recognition result corresponding to a second biometric image, and a third object recognition result corresponding to a target sample image, and the contrastive recognition loss being configured for characterizing consistency between the first object recognition result and the third object recognition result and a difference between the first object recognition result and the second object recognition result; the first biometric image indicating the first sample object, the second biometric image indicating the second sample object, the target sample image being obtained through biometric image generation by an initial generation model based on sample distribution data and a first encoded feature obtained by encoding the first biometric image, and the sample distribution data representing a distribution of biometric line features in the first biometric image; and the biometric texture loss being determined based on the first encoded feature and a first preset signal, and the first preset signal being a signal conforming to the distribution of the biometric texture features.

12. An electronic device, comprising:

a processor; and
a memory configured to store a processor-executable instruction;
the processor being configured to execute the instruction, to implement the method for training a model according to any one of claims 1 to 7 or the method for generating a biometric image according to either of claims 8 and 9.

13. A computer-readable storage medium, an instruction in the storage medium, when executed by a processor of an electronic device, causing the electronic device to perform the method for training a model according to any one of claims 1 to 7 or the method for generating a biometric image according to either of claims 8 and 9.

14. A computer program product, comprising a computer instruction, the computer instruction being stored in a computer-readable storage medium, a processor of a computer device reading the computer instruction from the computer-readable storage medium, and the processor executing the computer instruction, to cause the computer device to perform the method for training a model according to any one of claims 1 to 7 or the method for generating a biometric image according to either of claims 8 and 9.

100

200

FIG. 1

Obtain a first sample image, sample distribution data corresponding to the first sample image, a second sample image, and a first preset signal — S201

Encode the first sample image to obtain a first encoded feature — S203

Input the first encoded feature and the sample distribution data into a to-be-trained generation model, and perform biometric image generation to obtain a target sample image — S205

Determine a biometric texture loss based on the first encoded feature and the first preset signal — S211

Obtain a first object recognition result corresponding to the first sample image, a second object recognition result corresponding to the second sample image, and a third object recognition result corresponding to the target sample image — S207

Determine a contrastive recognition loss based on the first object recognition result, the second object recognition result, and the third object recognition result — S209

Train the to-be-trained generation model based on the contrastive recognition loss and the biometric texture loss, to obtain the image generation model — S213

FIG. 2

Determine negative sample association data according to a first object recognition result and a second object recognition result — S2091

Determine positive sample association data according to the first object recognition result and a third object recognition result — S2093

Determine a contrastive recognition loss according to the negative sample association data and the positive sample association data — S2095

FIG. 3

Biometric
texture
loss
Second encoded ◄──────► First preset signal
feature

To-be-trained
dimension-
reduction model

First encoded
feature

First sample image → To-be-trained Encoder → To-be-trained generation model → Target sample image

Target loss

Sample distribution data

Second sample image

First sample image → Object recognition model

First object recognition result
Second object recognition result → Contrastive recognition loss
Third object recognition result

**FIG. 4**

S501
Obtain target distribution data corresponding to a target object and a second preset signal

S503
Input the target distribution data and the second preset signal into an image generation model, and perform biometric image generation to obtain a target image

**FIG. 5**

Second preset signal (Gaussian distribution signal) → Image generation model → Target image (Realistic biometric image)

Target distribution data (Bezier curve image)

**FIG. 6**

Apparatus for training a model

First sample data obtaining module — 710

↓

First encoding module — 720

↓

First image generation module — 730

↓

First object recognition module — 740

↓

Contrastive recognition loss determining module — 750

↓

Biometric texture loss determining module — 760

↓

Model training module — 770

## FIG. 7

Apparatus for generating a biometric image

Data obtaining module — 810

↓

Second image generation module — 820

## FIG. 8

FIG. 9

FIG. 10

## INTERNATIONAL SEARCH REPORT

| International application No. |
|---|
| **PCT/CN2024/110011** |

### A. CLASSIFICATION OF SUBJECT MATTER

G06V 40/00(2022.01)i

According to International Patent Classification (IPC) or to both national classification and IPC

### B. FIELDS SEARCHED

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, CNKI, IEEE: 图像, 生成, 模型, 训练, 识别, 损失, 分布, 编码, 肌理, training, image generation, biological characteristic, encoder, identification loss, biological feature

### C. DOCUMENTS CONSIDERED TO BE RELEVANT

| Category* | Citation of document, with indication, where appropriate, of the relevant passages | Relevant to claim No. |
|---|---|---|
| PX | CN 117523598 A (TENCENT TECHNOLOGY (SHENZHEN) CO., LTD.) 06 February 2024 (2024-02-06) description, paragraphs [0003]-[0034] | 1-14 |
| A | CN 116958627 A (TENCENT TECHNOLOGY (SHENZHEN) CO., LTD.) 27 October 2023 (2023-10-27) description, paragraphs [0047]-[0202] | 1-14 |
| A | CN 101968850 A (CHONGQING UNIVERSITY) 09 February 2011 (2011-02-09) entire document | 1-14 |
| A | WO 2022213717 A1 (BEIJING BAIDU NETCOM SCIENCE TECHNOLOGY CO., LTD.) 13 October 2022 (2022-10-13) entire document | 1-14 |

☐ Further documents are listed in the continuation of Box C.        ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 October 2024** | **21 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/110011**

| Patent document cited in search report | | | Publication date (day/month/year) | Patent family member(s) | Publication date (day/month/year) |
|---|---|---|---|---|---|
| CN | 117523598 | A | 06 February 2024 | None | |
| CN | 116958627 | A | 27 October 2023 | None | |
| CN | 101968850 | A | 09 February 2011 | None | |
| WO | 2022213717 | A1 | 13 October 2022 | None | |

Form PCT/ISA/210 (patent family annex) (July 2022)